# EUROPEAN PATENT SPECIFICATION

(11) **EP 0 684 404 B1**
(45) Date of publication and mention of the grant of the patent: **11.11.1998**
(21) Application number: 95850090.2
(22) Date of filing: 12.05.1995
(51) Int. Cl.: F16F 1/38, B60G 7/00

(54) **Articulation arrangement for reaction rods**
Gelenkanordnung für Reaktionsstangen
Agencement d'articulation pour tiges de réaction

(30) Priority: 27.05.1994 SE 9401825
(43) Date of publication of application: 29.11.1995
(73) Proprietor: Scania CV AKTIEBOLAG, 151 87 Södertälje (SE)
(72) Inventor: Dahlberg, Magnus, S-118 58 Stockholm (SE); Nyman, Anna, S-151 44 Södertälje (SE)

(56) References cited:
- EP-A- 0 007 430
- EP-A- 0 033 362
- EP-A- 0 487 458
- FR-A- 2 691 767
- US-A- 2 607 617
- US-A- 3 117 810
- PATENT ABSTRACTS OF JAPAN vol. 013 no. 206 (M-826) ,16 May 1989 & JP-A-01 030937 (MARUYASU KOGYO KK) 1 February 1989,

## Description

The present invention relates to an articulation arrangement of the kind indicated in the preamble to patent claim 1.

### State of the art

US-A-2 607 617 discloses an articulation arrangement at one end of a rod which forms part of a vehicle wheel suspension. The arrangement includes a head firmly attached to a continuous bar. The head has an aperture which has running through it a sleeve which is fastened in the aperture and which accommodates an annualar elastic bushing which surrounds and elastically supports a journal which runs through the bushing and is intended to anchor the end of the rod in a mounting. The bushing is firmly vulcanised between the inside of the sleeve and the journal. The document mentioned does not disclose a bushing according the present invention i.e a bushing with free end surfaces which are not curved before the sleeve is subjected to a diameter reduction but which are curved after the sleeve has been subjected to a diameter reduction.

US A 1 983 796 describes a vibration isolating articulated bolt unit intended for articulated connections between mutually movable parts or constructional elements of vehicles.

This known articulated bolt unit incorporates a tubular articulation journal whose end portions are of smaller outside diameter than the journal portion between the end portions so as to form annular shoulders at the transitions between the end portions and the larger outside diameter journal portion situated between them. In the articulation journal is inserted a tubular rubber bushing which is surrounded by an outer metal sleeve whose diameter is reduced by forging so as to compress the rubber bushing inside. Thereafter the ends of the surrounding outer metal sleeve are bent radially inwards against the smaller outside diameter end portions of the articulation journal so as to strongly compress the ends of the rubber bushing around the annular shoulders of the articulation journal.

A considerable disadvantage of this known articulated bolt unit is that the ends of the outer metal sleeve have to be bent inwards radially towards the end portions of the articulation journal, which involves carrying out a separate pressing or forging process on each end of the articulated bolt unit.

The kind of articulation arrangement to which the present invention refers is situated at one or both ends of a rod which consists of an elongated tube or bar. The invention is principally intended for reaction rods which form part of a vehicle wheel suspension. Such a reaction rod is provided at at least one of its two ends with a head firmly attached thereto in the form of an end lug which has running through it an aperture in which the articulation arrangement is fastened. The articulation arrangement incorporates a sleeve which is fastened in the aperture and which accommodates an annular elastic bushing body which surrounds and elastically supports a journal which extends centrally through the bushing and which is intended for anchoring the respective rod end in a mounting in the vehicle.

In vehicle technology, such reaction rods are used for damping the transmission of impact movements from a vehicle's wheels to its loadbearing parts and for limiting the tendency of a vehicle axle to swivel backwards or forwards about its central axis as a result respectively of braking forces or acceleration forces which occur during vehicle movement. This type of reaction rod is usually arranged so that it extends in the longitudinal direction of a vehicle. Each end of the preferably tubular rod is provided with a firmly attached articulation head in the form of an end lug.

When the vehicle is in movement on a road, road surface irregularities, acceleration and deceleration subject the reaction rods and hence the elastic bushings (e.g. rubber bushings) in the articulation arrangements at the rod ends to a variety of stress situations which may involve torsional stresses, shearing forces and conical compression.

To ensure that energy absorption in the articulation arrangements takes place in the rubber bushings and not in the boundary layer between the bushings and the journals or sleeves, it is important to prevent sliding between the rubber bushings and the sleeves/end lugs and also between the rubber bushings and the journals. If the rubber bushings can slide relative to the sleeves or journals, the rubber bushings are also subjected to wear damage resulting in gradual destruction of the bushings.

Such relative movements may be prevented by the respective rubber bushing being fastened to the outside of the journal and to the inside of the surrounding sleeve by means of a powerful bonding agent. However, such a design renders any replacement of a defective rubber bushing difficult and expensive. A powerful bonding agent may also be used to fasten the rubber bushings between the respective journal and a steel ring divided into segments which surrounds the bushing. In this case each segment of the steel ring has a locking collar directed radially outwards which, at the time when the rubber bushing supporting the journal is pressed into the aperture running through the respective end lug, is brought into locking engagement in a corresponding groove in the end lug. However, this constructional design involves a number of parts and requires that the ring segments be provided with locking collars and that the end lugs be provided with an internal groove, thereby resulting in a relatively complicated design which is expensive to manufacture.

### Objects of the invention

The invention thus has the object of providing an end articulation arrangement which is suitable for, for example, reaction rods and which avoids the disadvantages of the known design solutions mentioned above. The invention also has the object of improving the durability of the rubber bushing in the articulation arrangement while at the same time the bushing fixes the position of the journal relative to the sleeve surrounding the bushing without requiring any radially inward bending of the edges of the sleeve. This means, in other words, that it will be possible to use a simple tubular sleeve to which it is easy to apply a certain diameter reduction which is required to enable the sleeve to be inserted in the aperture running through the end lug and to be anchored there by prestress and by the rubber bushing in a state of compression in a radial direction so as to effectively prevent mutual axial movement between the end lug, the sleeve, the rubber bushing and the journal fastened therein. The rubber bushing will also be connected to the journal and the sleeve by being firmly vulcanised between these two parts.

### Summary of the invention

In a articulation arrangement of the kind indicated in the preamble to patent claim 1, the objects stated above are achieved by the articulation arrangement exhibiting the features indicated in the characterising part of claim 1.

Further developments of the articulation arrangement according to claim 1 may also exhibit the features indicated in the dependent claims.

A distinguishing feature of the articulation arrangement according to the invention is thus that the sleeve is a straight cylindrical metal tubular sleeve whose walls are of substantially constant thickness. In this case the elastic bushing body is a rubber bushing which is firmly vulcanised between the cylindrical inside of the tubular sleeve and a radially dilated fastening portion of the journal. In its initial state, i.e. before the sleeve is subsequently subjected to diameter reduction with consequent prestressing of the articulation arrangement and the bushing, the rubber bushing exhibits annular free end surfaces which are not curved in the longitudinal direction and are situated in the free space between the inside of the sleeve and the fastening portion of the journal. When the sleeve is subjected to diameter reduction and is pressed into the aperture in the end lug, the resulting compression of the rubber bushing means that the free end surfaces are arched so that they exhibit a convexly curved circular surface cross-section. The thus convexly curved free end surfaces of the rubber bushing therefore have a shape corresponding to part of the shell surface of a torus. The fact that the sleeve is a straight cylindrical metal tubular sleeve with preferably substantially constant wall thickness makes it easy and therefore inexpensive to manufacture. The fact that the rubber bushing firmly vulcanised between the inside of the tubular sleeve and the fastening portion of the journal will in its initial state have free end surfaces which are planar as seen in an axial longitudinal section through the bushing renders it easier and less expensive to produce and vulcanise the rubber bushing between these two constructional elements.

The constructional design and the firm vulcanisation of the rubber bushing according to the invention results in a bushing with increased durability and very good capacity for fixing the axial position of the journal in the surrounding sleeve and, furthermore, this is achieved without requiring any bending inwards whatever of the edges of the sleeve.

In the initial state it is advantageous that each of the free end surfaces of the rubber bushing form the shell surface of an imaginary truncated straight circular cone. It is advantageous that the radially dilated fastening portion of the journal be rotationally symmetrical with respect to the central axis of the journal and be entirely convex. In the initial state it is in this case advantageous that the free end surfaces of the rubber bushing be so directed inwards towards the surface of the convex portion of the journal that the free end surface and the journal portions surface are substantially at a right-angle as seen in axial longitudinal section through the journal and the rubber bushing.

The sleeve may preferably take the form of a cold-drawn seamless standard tube made of a material with a yield point of at least 380 MPa. Cold-worked steel would probably be a suitable material in this respect and the tubular sleeve should preferably have a wall thickness of approximately 1.5 mm.

### Brief description of the drawings

The invention is described and explained further below with reference to the attached drawings which depict an embodiment of the articulation arrangement according to the invention, as follows:
Fig.1 shows the rear section of a truck chassis equipped with a four-wheel-driven balanced bogey provided with horizontally arranged reaction rods with end articulation arrangements according to the invention;
Fig.2 shows an axial longitudinal section through an end portion of a reaction rod of the kind depicted in Fig.1;
Fig.3 shows the reaction rod according to Fig.2 as seen in side view in direction III in Fig.2;
Fig.4 shows the articulation arrangement according to Fig.2 on a larger scale whereby the upper half of the diagram shows the rubber bushing in its unprestressed initial state, while the lower half of the diagram shows the rubber bushing in a prestressed state when the surrounding tubular sleeve has undergone a diameter reduction to facilitate pressing the articulation arrangement into the end lug of the reaction rod, corresponding to the situation shown in Fig.2.

### Description of an embodiment

Reaction rods provided with end articulation arrangements according to the present invention may be employed in many different kinds of vehicle wheel suspensions. A particularly interesting application in this respect is reaction rods incorporated in wheel suspension systems on so-called tandem-mounted vehicle axles for heavy duty trucks and buses. The description below therefore refers to a reaction rod used in such a context.

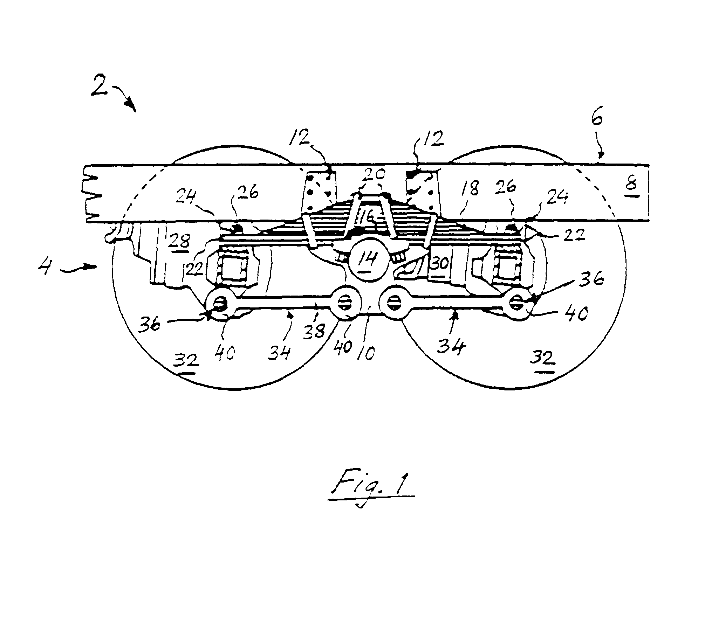

Fig.1 thus shows the rear section of a truck chassis 2 which is equipped with a four-wheel-driven balanced bogey 4. The chassis 2 incorporates a frame 6 consisting of a pair of elongated parallel sidebeams 8, only one of which is depicted in the drawing. Each sidebeam 8 has attached to it by bolted connection 12 a loadbearing axle mounting 10. In this mounting an undepicted axle is fastened permanently perpendicular to the sidebeam 8 and is arranged to rotatably support a bearing housing 14 which has a support surface 16 to which a multiple leaf spring 18 aligned with the frame 6 is fastened by U-bolts 20. The end portions 22 of the multiple leaf springs extend through recesses 24 in the spring mountings 26 which are firmly arranged on forward and rear vehicle axles 28 and 30 respectively which are arranged transverse to the frame 6 and which support vehicle wheels 32 by which the truck is driven. When the truck is in movement on a road, road surface irregularities, acceleration, deceleration etc. result in reaction forces in the axles 28 and 30. For the transmission of these forces from the axles 28, 30 to the frame 6, the axle 28 and the axle 30 respectively are connected, via a number of upper and lower reaction rods 34 (of which only two lower reaction rods 34 are depicted in Fig.1) to the loadbearing axle mounting 10 fastened to the frame. The role of the reaction rods in the bogey is therefore to fix the axles 28, 30 in the longitudinal direction of the vehicle and to absorb longitudinal forces. To enable the axles to move relative to the frame 6, the articulation arrangements 36 at the ends of the reaction rods 34 must allow vertical movements and a certain tilting of the respective axle.

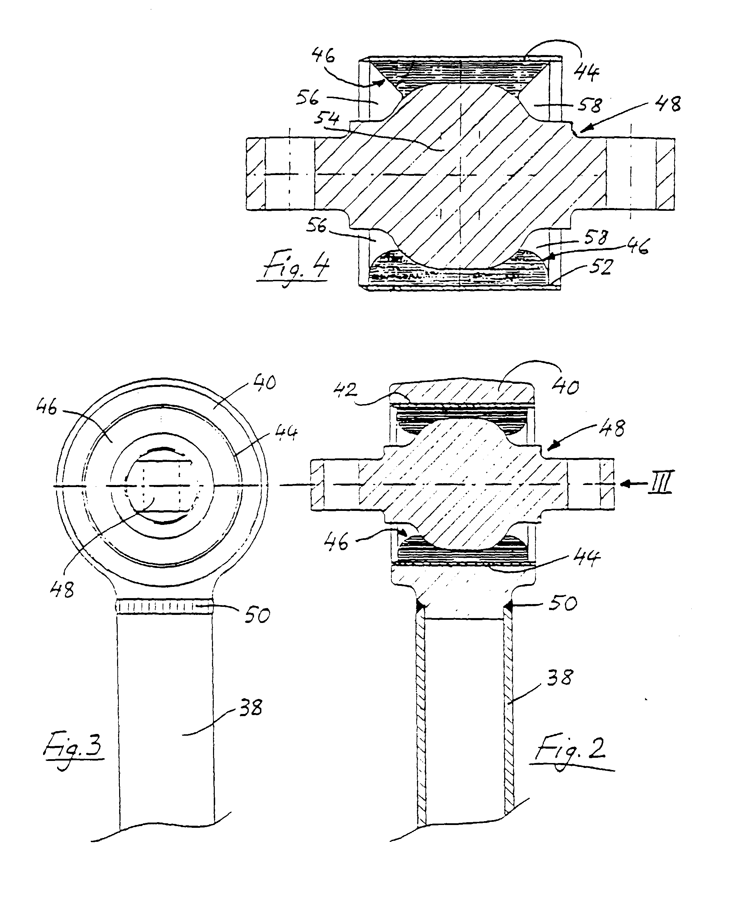

Each reaction rod 34 take the form of a bar or a continuous tube 38 (see Figs. 2-3) which is provided at each end with a head firmly attached to it in the form of an end lug 40 through which runs an aperture 42 in which the articulation arrangement 36 is fastened.

As may be seen in Fig.2 and Fig.4, the articulation arrangement incorporates a sleeve 44 which is fastened by prestress in the aperture 42 and which has an annular elastic bushing body in the form of a rubber bushing 46 fastened (firmly vulcanised) inside it. The rubber bushing 46 surrounds and supports elastically a journal 48 running through the bushing in order to anchor the respective end of the reaction rod in a mounting. Where the reaction rod 34 consists of a metal tube 38, as depicted in Figs.2 and 3, it may be advantageous for its two likewise metal end lugs 40 to be fastened in the ends of the tube by circumferential welds 50.

The sleeve 44 of the articulation arrangement 36 is a straight cylindrical metal tubular sleeve which preferably consists of a cold-drawn seamless standard tube. This tube may for example consist of cold-worked steel with a yield point of at least 380 MPa. The wall of the tubular sleeve, which over the whole axial longitudinal extent of the sleeve is therefore situated at a constant radial distance from the central axis of the sleeve, exhibits a substantially constant thickness of material. The rubber bushing 46 firmly vulcanised between the cylindrical inside 52 of the tubular sleeve 44 and a radially dilated fastening portion 54 of the journal 48 is depicted in the upper half of Fig.4 in an initial state before the sleeve 44 is subjected to diameter reduction to create prestressing of the articulation arrangement 36 and facilitate its fastening in the aperture 42 in the end lug 40. The upper half of Fig.4 thus shows the rubber bushing 46 in its state of being uncompressed in the radial direction. In this initial state before the sleeve 44 is subjected to diameter reduction, the rubber bushing displays (see upper half of Fig.4) annular free end surfaces which are rectilinear in the section depicted and which face obliquely outwards into the free spaces 56, 58 between the inside 52 of the sleeve and the fastening portion 54 of the journal 48.

Fig.2 and the lower half of Fig.4 show the rubber bushing 46 and its surrounding tubular sleeve 44 in the state which results from the sleeve being subjected to diameter reduction and being pressed into the aperture 42 in the end lug 40. In this reduced-diameter state of the tubular sleeve 44, the rubber bushing 46 is therefore subjected to prestress directed radially inwards which causes compression of the bushing material and gives the rubber bushing the shape depicted in Fig.2 and the lower half of Fig.4. This results in the free end surfaces of the rubber bushing 46 having a convex curve in the free spaces 56 and 58. The doubly curved free end spaces of the rubber bushing thus each correspond to a lateral half of the inward-facing shell surface of a torus. In contrast, in the initial state depicted in the upper half of Fig.4 the free end surfaces of the rubber bushing 46 each form the shell surface of an imaginary truncated straight circular cone.

As may be clearly seen in Figs. 2 and 4, the radially dilated fastening portion 54 of the journal 48 is rotationally symmetrical with respect to the central axis of the journal and is entirely convex. In the initial state depicted in the upper half of Fig.4, the free end surfaces of the rubber bushing 46 are also directed inwards towards the surface of the convex journal portion 54 so that the angle between the end surface and the journal portion surface is substantially a right-angle as seen in the axial longitudinal section through the journal and the rubber bushing as shown in the upper half of Fig.4.

The fact that the sleeve 44 of the articulation arrangement 36 is a straight cylindrical tubular sleeve with substantially constant thickness of material means that the sleeve is easy and therefore inexpensive to manufacture. Moreover, in the initial state, i.e. before the radial compression or prestressing of the sleeve 44 and the consequent compression of the rubber bushing 46, the latter will have its outward-facing free end surfaces uncurved as seen in axial longitudinal section through the bushing, thereby making it easy to produce the rubber bushing and carry out its firm vulcanisation between the sleeve 44 and the fastening portion 54. Tests were carried out using a tubular sleeve consisting of a cold-drawn seamless standard tube of dimensions 80 x 1.5 mm. Between the sleeve 44 and journal 48 the rubber was galvanised to the shape depicted in the upper half of Fig.4. Using an undivided standard tube as sleeve 44 (instead of a split sleeve as previously) affords the advantage that the rubber in the rubber bushing need not be slit into a number of segments and that only one component need be fitted in the vulcanising tool as against, for example, three components when using a three-part sleeve.

The degree of prestress adopted in the test carried out with the aforesaid standard tubular sleeve of dimensions 80 x 1.5 mm corresponded to a total diameter reduction of the order of 2 mm brought about by successive radial compression of the sleeve by pressing it through one or more cones. Inserting into the end lug a tubular sleeve of cold-worked steel with a yield point of at least approximately 380 MPa required a pressing-in force of the order of magnitude of 18 kN to a maximum of 117 kN depending on the desired grip between the aperture in the end lug and the tubular sleeve.

Finally, it may be mentioned that the joining together of the reaction rod tube and its two heads (end lugs) may be carried out in at least three different ways, viz. welding (see Figs. 2-3), clamping or friction welding. However, a clamped connection requires twice as much material over a relatively long section at the joint between head and tube, which makes this kind of joint heavier than a weld. Clamping also involves a new type of tool. Friction welding is of inherently great reliability but as the investment cost of friction welding equipment is significant, traditional welding is still likely to be preferable for joining the reactor rod pipe to its articulation heads.

Using reaction rods according to the invention probably makes it possible to achieve a weight reduction of the order of at least 60-70 kg for balanced bogies of the type depicted in Fig.1.

## Claims

1. Articulation arrangement (36) at one end of a rod (34), e.g. a reaction rod which forms part of a vehicle wheel suspension, consists of a continuous tube (38) or a bar and is provided at at least one of its two ends with a head firmly attached thereto in the form of an end lug (40) which as running through it an aperture (42) in which the articulation arrangement (36) is fastened, which articulation arrangement incorporates a sleeve (44) which is fastened in the aperture and which accommodates an annular elastic bushing body (46) which surrounds and elastically supports journal (48) which runs through one bushing and is intended to anchor the end of the rod in a mounting, whereby the sleeve (44) is a straight cylindrical metal tubular sleeve whose wall, which is thus situated at a constant radial distance from the central axis of the sleeve over the whole axial longitudinal extent of the sleeve, exhibits substantially constant wall thickness, and that the elastic bushing body (46) consists of a rubber bushing (46) which is firmly vulcanised between the cylindrical inside (52) of the tubular sleeve and a radially dilated fastening portion (54) of the journal (48) characterised in that the rubber bushing (46) in its initial state, before the sleeve (44) is subjected to diameter reduction with consequent prestressing of the articulation arrangement (36) and compression of the bushing, exhibits annular free end surfaces, which are not curved in longitudinal section, in the free spaces (56,58) between the inside (52) of the sleeve and the fastening portion (54) of the journal, and which, after the sleeve has been subjected to diameter reduction and been pressed into the aperture (42) in the end lug (40), exhibits free end surfaces with convexly curved circular surface cross-section.

2. Articulation arrangement according to claim 1, **characterised** in that in the initial state the free end surfaces of the rubber bushing (46) each form the shell surface of an imaginary truncated straight circular cone.

3. Articulation arrangement according to claim 1 or 2, **characterised** in that the radially dilated fastening portion (54) of the journal (48) is rotationally symmetrical with respect to the central axis of the journal and is entirely convex, and that in the initial state the free end surfaces of the rubber bushing (46) are so directed inwards towards the surface of this convex journal portion (54) that the angle between the free surface and the journal portion surface is substantially a right-angle as seen in axial longitudinal section through the journal and the rubber bushing.

4. Articulation arrangement according to any one of the foregoing claims, **characterised** in that the sleeve (44) consists of a cold-drawn seamless standard tube made of a material with a yield point of at least 380 MPa, e.g. cold-worked steel, which tube preferably has a wall thickness of approximately 1.5 mm.

## Patentansprüche

1. Gelenkanordnung (36) an einem Ende einer Stange (34), z. B. einer Reaktionsstange, die Teil einer Fahrzeugradaufhängung ist, ein ununterbrochenes Rohr (38) oder einen Stab aufweist und an mindestens einem ihrer beiden Enden einen daran fest angebrachten Kopf in der Form eines Endansatzes (40) hat, durch den eine Öffnung (42) verläuft, in der die Gelenkanordnung (36) befestigt ist, wobei die Gelenkanordnung eine Muffe (44) umfaßt, die in der Öffnung befestigt ist und die einen ringförmigen elastischen Buchsenkörper (46) aufnimmt, der einen Zapfen (48) umgibt und elastisch abstützt, der durch die Buchse verläuft und der das Ende des Rohres in einem montierten Zustand verankern soll, wobei die Muffe (44) eine gerade zylindrische Metallrohrmuffe ist, deren Wand, die somit in einem konstanten radialen Abstand von der Mittelachse der Muffe über die gesamte axiale Längsausdehnung der Muffe liegt, im wesentlichen konstante Wandstärke aufweist, und der elastische Buchsenkörper (46) eine Gummibuchse (46) umfaßt, die fest zwischen die zylindrische Innenseite (53) der rohrförmigen Muffe und einem radial ausgedehnten Halteteil (54) des Zapfens (48) vulkanisiert ist, dadurch gekennzeichnet, daß die Gummibuchse (46) in ihrem Anfangszustand, bevor die Muffe (44) einer Durchmesserreduzierung mit dabei erfolgender Vorspannung der Gelenkanordnung (36) und Kompression der Buchse unterworfen ist, ringförmige freie Endoberflächen aufweist, die im Querschnitt in den Freiräumen (56, 58) zwischen der Innenseite (52) der Muffe und dem Halteteil (54) des Zapfens nicht gekrümmt sind, und die, nachdem die Muffe einer Durchmesserreduzierung unterworfen und in die Öffnung (42) im Endansatz (40) eingedrückt worden ist, freie Endoberflächen mit konvex gekrümmtem kreisförmigem Oberflächenquerschnitt aufweist.

2. Gelenkanordnung nach Anspruch 1, dadurch gekennzeichnet, daß im Anfangszustand jede der freien Endoberflächen der Gummibuchse (46) die Mantelfläche eines gedachten geraden Kreiskegelstumpfes bildet.

3. Gelenkanordnung nach Anspruch 1 oder 2, dadurch gekennzeichnet, daß der radial ausgedehnte Halteteil (54) des Zapfens (48) rotationssymmetrisch zur Mittelachse des Zapfens und insgesamt konvex ist, und daß im Anfangszustand die freien Endoberflächen der Gummibuchse (46) so nach innen zur Oberfläche dieses konvexen Zapfenteils (54) gerichtet sind, daß der Winkel zwischen der freien Oberfläche und der Zapfenteiloberfläche im axialen Längsschnitt durch den Zapfen und die Gummibuchse betrachtet, im wesentlichen ein rechter Winkel ist.

4. Gelenkanordnung nach einem der vorhergehenden Ansprüche, dadurch gekennzeichnet, daß die Muffe (44) ein kaltgezogenes nahtloses Standardrohr umfaßt, das aus einem Material mit einem Fließpunkt von mindestens 380 MPa hergestellt ist, z. B. kaltbearbeiteter Stahl, wobei das Rohr vorzugsweise eine Wandstärke von ca. 1,5 mm hat.

## Revendications

1. Agencement d'articulation (36) situé à une extrémité d'une tige (34), c'est-à-dire d'une tige de réaction qui fait partie d'une suspension de roue de véhicule, constituée par un tube continu (38) ou une barre et comportant, sur au moins l'une de ses deux extrémités, une tête qui est fixée fermement à cette tige sous la forme d'une patte d'extrémité (40), qui est traversée par une ouverture (42) dans laquelle l'agencement d'articulation (36) est fixé, lequel agencement d'articulation comprenant un manchon (44) qui est fixé dans l'ouverture et qui loge un corps formant manchon élastique annulaire (46), qui entoure et supporte élastiquement un tourillon (48) qui traverse le manchon et est destiné à ancrer l'extrémité de la tige dans un support, et dans lequel le manchon (44) est un manchon tubulaire métallique cylindrique rectiligne, dont la paroi, qui est par conséquent située à une distance radiale constante de l'axe central du manchon sur l'ensemble de l'axe longitudinal du manchon, présente une épaisseur de paroi sensiblement constante, et le corps (46) du manchon élastique est constitué d'un manchon de caoutchouc (46) qui est fixé fermement par vulcanisation entre la face intérieure cylindrique (52) du manchon tubulaire et une partie de fixation (54), dilatée radialement, du tourillon (48), caractérisé en ce que le manchon en caoutchouc (46), dans son état initial, avant que le manchon (44) soit soumis à une réduction de diamètre avec une précontrainte importante de l'agencement d'articulation (36) et une compression du manchon, présente des surfaces d'extrémité annulaires libres, qui ne sont pas courbées en coupe longitudinale, dans les espaces libres (56,58) entre la face intérieure (52) du manchon et la partie de fixation (54) du tourillon, et, une fois que le manchon a été soumis à une réduction de diamètre et a été enfoncé dans l'ouverture (42) dans la patte d'extrémité (40), présente des surfaces d'extrémité libres qui possèdent une section transversale circulaire courbée avec une forme convexe.

2. Agencement d'articulation selon la revendication 1, caractérisé en ce que dans l'état initial, les surfaces d'extrémité libres du manchon de caoutchouc (46) forment chacune la surface enveloppe d'un tronc de cône circulaire droit imaginaire.

3. Agencement d'articulation selon la revendication 1 ou 2, caractérisé en ce que la partie de fixation (54), dilatée radialement, du tourillon (48) présente une symétrie de révolution par rapport à l'axe central du tourillon et est entièrement convexe et, en ce que dans l'état initial, les surfaces d'extrémité libre du manchon de caoutchouc (46) sont dirigées vers l'intérieur en direction de la surface de cette partie convexe (54) du tourillon de telle sorte que l'angle entre la surface libre et la surface de la partie du tourillon est sensiblement un angle droit lorsqu'on regarde une coupe axiale longitudinale du tourillon et du manchon de caoutchouc.

4. Agencement d'articulation selon l'une quelconque des revendications précédentes, caractérisé en ce que le manchon (44) est constitué par un tube standard sans joint étiré à froid réalisé en un matériau possédant une limite d'élasticité égale à au moins 380 MPa, par exemple de l'acier façonné à froid, lequel tube possède de préférence une épaisseur de paroi d'environ 1,5 mm.
